# EUROPÄISCHE PATENTSCHRIFT

(11) **EP 1 657 800 B1**
(45) Veröffentlichungstag und Bekanntmachung des Hinweises auf die Patenterteilung: **08.08.2007**
(21) Anmeldenummer: 04026962.3
(22) Anmeldetag: 12.11.2004
(51) Int. Cl.: H02K 1/27, H02K 15/03

(54) **Permanentmagnet-Rotor**
Permanent-magnet rotor
Rotor à aimants permanents

(43) Veröffentlichungstag der Anmeldung: 17.05.2006
(73) Patentinhaber: GRUNDFOS A/S, DK-8850 Bjerringbro (DK)
(72) Erfinder: Pedersen, Henrik Ørskov, 8600 Silkeborg (DK); Rasmussen, Keld Folsach, 8850 Bjerringbro (DK); Hellegaard, Kjeld, 8850 Bjerringbro (DK)
(74) Vertreter: Hemmer, Arnd

(56) Entgegenhaltungen:
- EP-A2- 1 009 085
- WO-A-03/065550
- DE-A1- 19 933 009
- JP-A- 2000 139 063
- PATENT ABSTRACTS OF JAPAN Bd. 2000, Nr. 13, 5. Februar 2001 (2001-02-05) -& JP 2000 278895 A (NISSAN MOTOR CO LTD), 6. Oktober 2000 (2000-10-06)
- PATENT ABSTRACTS OF JAPAN Bd. 1996, Nr. 12, 26. Dezember 1996 (1996-12-26) -& JP 08 223831 A (TOSHIBA CORP), 30. August 1996 (1996-08-30)

## Beschreibung

Die Erfindung betrifft einen Permanentmagnet-Rotor für einen Elektromotor sowie ein Verfahren zur Herstellung eines solchen Permanentmagnet-Rotors.

Bei Permanentmagnetmotoren sind im Rotor über den Umfang verteilt Permanentmagneten angeordnet. Für einen möglichen kostengünstigen Aufbau des Rotors werden blockförmige Permanentmagneten eingesetzt, welche sich parallel zur Drehachse des Rotors im Inneren des Rotors erstrecken. Diese Anordnung hat den Nachteil, dass der Drehmomentverlauf des Motors unerwünschte Spitzen bzw. Wellen aufweist. Um einen gleichmäßigeren Drehmomentverlauf zu erreichen, ist es bekannt, im Rotor im Bereich der Kanten der Permanentmagnete Freiräume oder Nuten auszubilden, in deren Verlauf der magnetische Fluss unterbrochen bzw. reduziert wird. Die Nuten werden schraubenförmig oder schrägverlaufend ausgebildet, um so einen gleichmäßigeren Drehmomentverlauf zu erreichen. Am Außenumfang des Rotors ausgebildete Nuten führen jedoch zu einem größeren Luftspalt zwischen Rotor und Stator und somit zu einem Wirkungsgradverlust.

Aus DE 199 33 009 A1 sowie EP 1 009 085 A2 sind Rotoren bekannt, bei welchen am Außenumfang derartige Nuten ausgebildet sind. Ferner ist aus DE 199 33 009 A1 sowie JP 2000278895 eine Anordnung von Freiräumen im Inneren des Rotors in der Nähe der Permanentmagneten bekannt. Diese Anordnung hat gegenüber den offenen Nuten jedoch den Nachteil, dass im Bereich der Kanten der Permanentmagneten nur eine geringere Reduzierung des magnetischen Flusses erzielt wird.

Aus JP 2000139063 ist eine Anordnung von Nuten zwischen den Permanentmagneten des Rotors bekannt, welche schräg verlaufen und sich zum Außenumfang hin öffnen. Dabei ist die Nut breiter im Außenumfang geringer als in Umfangsrichtung zwischen den Permanentmagneten. Durch diese Anordnung wird der Drehmomentverlauf des Motors verbessert, jedoch besteht auch bei dieser Ausgestaltung weiterer Verbesserungsbedarf zur Glättung des Drehmomentverlaufs.

Es ist daher Aufgabe der Erfindung, einen verbesserten Permanentmagnetrotor für einen Elektromotor zu schaffen, welcher einen gleichmäßigeren Drehmomentverlauf mit möglichst hohem Wirkungsgrad ermöglicht.

Diese Aufgabe wird durch einen Permanentmagnetrotor für einen Elektromotor mit den im Anspruch 1 angegebenen Merkmalen gelöst.

Ein besonders günstiges Verfahren zur Herstellung eines solchen Permanentmagnet-Rotors wird mit den im Anspruch 15 angegebenen Merkmalen erreicht. Bevorzugte Ausführungsformen ergeben sich aus den zugehörigen Unteransprüchen.

Bei dem erfindungsgemäßen Permanentmagnet-Rotor sind die Permanentmagnete im Inneren des Rotors parallel zur Rotationsachse des Rotors angeordnet. Es können dabei blockförmige Permanentmagneten angeordnet werden, welche sich in Breitenrichtung entweder radial oder tangential im Inneren des Rotors erstrecken. Im Bereich der radial äußeren Längskanten, d. h. im Bereich der Längskanten der Permanentmagneten, welche dem Außenumfang des Rotors am nächsten gelegen sind, sind in dem Rotor nach außen geöffnete Nuten ausgebildet. Diese Nuten verlaufen zur Längskante des angrenzenden Permanentmagneten in Umfangsrichtung geneigt oder gekrümmt, d. h. im Wesentlichen schraubenförmig entlang der Umfangsfläche des Rotors. Durch diese Nuten werden Drehmomentspitzen bei Rotation des Rotors abgemildert und ein gleichmäßiger Drehmomentverlauf erreicht. Die Nuten sind dabei so angeordnet, dass die Mittellinie jeder Nut die Längskante des angrenzenden Permanentmagneten zumindest einmal kreuzt. Dadurch kann die gesamte Längskante des Permanentmagneten gegenüber dem Außenumfang des Rotors und dem Stator durch die Nut magnetisch isoliert werden, um den Drehmomentverlauf zu verbessern.

Ferner weisen die Nuten an der Außenseite des Rotors in Umfangsrichtung eine geringere Breite auf als in einem radial weiter innen liegenden Bereich der Nut, wobei die Querschnittsform der Nut über die Länge des Rotors konstant ist. D. h. der Querschnitt der Nut im Rotor ist über die Länge des Rotors in Umfangsrichtung lediglich schraubenförmig versetzt, aber ansonsten konstant. Dadurch, dass die Nutbreite am Außenumfang des Rotors schmal ist, kann der dem Stator zugewandte Luftspalt des Rotors im Bereich der Nut klein gehalten werden, so dass der Wirkungsgradverlust aufgrund der Nut minimiert wird. Durch die Aufweitung der Nut zum Inneren des Rotors hin wird erreicht, dass die Nut an dem, dem Permanentmagneten zugewandten Endbereich bzw. Nutgrund eine so große Breite aufweist, dass auch bei stärkerer Neigung der Nut die Nut die Längskante des Permanentmagneten ausreichend abdeckt, um in diesem Bereich den magnetischen Fluss im Inneren des Rotorkerns zu unterbrechen. Durch den radial nach innen gewandten breiteren Bodenbereich wird der magnetische Fluss zwischen Nord- und Südpol des Magneten im Inneren des Rotors im Bereich der Längskante des Magneten unterbrochen. Dadurch wird sichergestellt, dass der magnetische Fluss überwiegend über den Stator geleitet wird, wodurch ein hoher Wirkungsgrad des Motors sichergestellt ist.

Vorzugsweise sind zumindest gleich viele Nuten wie Permanentmagneten vorhanden, so dass an jeder Stirnkante des Permanentmagneten eine ausreichende magnetische Isolierung durch die Nuten realisiert wird. Die Permanentmagneten können dabei radial gerichtet im Rotor oder auch tangential bzw. sehnenförmig ausgerichtet im Rotor angeordnet sein.

Bevorzugt besteht der Rotor aus zumindest zwei in Längsrichtung aneinander gefügten vorgefertigten Rotormodulen, wobei in jedem der Rotormodule Permanentmagnetabschnitte angeordnet sind und jedes der Rotormodule an seinem Außenumfang Nutabschnitte aufweist, wobei bei zusammengefügten Rotormodulen die Nutabschnitte der einzelnen Rotormodule gemeinsam die Nuten und die Permanentmagnetabschnitte der einzelnen Rotormodule gemeinsam die Permanentmagnete des Rotors bilden. Durch Kombination unterschiedlicher Rotormodule können Rotoren unterschiedlicher Länge gebildet werden. Bei der Montage müssen lediglich die einzelnen Rotormodule aneinandergefügt werden. Es ist anschließend nicht mehr notwendig, die Permanentmagnete in den montierten Rotor einzusetzen, da die Permanentmagnete aus einzelnen Permanentmagnetabschnitten bestehen, welche bereits in den Rotormodulen angeordnet sind. So ist es auch nicht erforderlich, unterschiedlich lange Permanentmagnete für verschieden lange (in Richtung der Rotorlängsachse) Rotoren bereitzuhallen. Die Permanentmagnetabschnitte der einzelnen Rotormodule sind bei Montage zu einem Gesamtrotor vorzugsweise so angeordnet, dass jeweils ein Permanentmagnetabschnitt eines Rotormoduls mit einem Permanentmagnetabschnitt des zweiten Rotormoduls fluchtet. Dies bedeutet, die Permanentmagnetabschnitte bilden Permanentmagnete, welche sich über die gesamte Länge des Rotors parallel zu dessen Drehachse erstrecken. Die Nutabschnitte an den einzelnen Rotormodulen sind bevorzugt so ausgebildet, dass sie bei zusammengefügten Rotormodulen aneinander anschließen und so durchgehende Nuten am Außenumfang des Rotors bilden.

Dies kann beispielsweise dadurch ermöglicht werden, dass die Nutabschnitte jedes Rotormoduls zu der Längskante des angrenzenden Permanentmagnetabschnitts derart geneigt sind, dass an jeder Stirnseite der Rotormodule die Mittellinien der Nutabschnitte in Umfangsrichtung jeweils denselben vorbestimmten Abstand zu der Längskante des Permanentmagnetabschnittes aufweisen. Dies gewährleistet, dass der Permanentmagnetabschnitt und der Nutabschnitt an der Stirnseite des Rotormoduls immer einen definierten Abstand zueinander aufweisen. Es wird somit eine bei allen Rotormodulen identische Schnittstelle geschaffen, welche es ermöglicht, die einzelnen Rotormodule so anzuordnen, dass an deren Stirnseiten sowohl die Permanentmagnetabschnitte als auch die Nutabschnitte miteinander fluchten bzw. aneinander anschließen. Auf diese Weise wird eine durchgehende Nut im Bereich eines angrenzenden Permanentmagneten, welcher aus mehreren Permanentmagnetabschnitten in Längsrichtung des Rotors zusammengesetzt ist, gebildet.

Weiter bevorzugt kreuzt die Mittellinie jedes Nutabschnittes die Längskante des angrenzenden Permanentmagnetabschnittes zumindest ein Mal. Dies bedeutet der zugehörige Nutabschnitt erstreckt sich radial außenliegend schräg über die Längskante des zugehörigen Permanentmagnetabschnittes. In dem Fall, dass der Nutabschnitt die angrenzende Längskante des Permanentmagnetabschnittes nur ein Mal oder in einer ungeraden Anzahl von Malen kreuzt, sind die Enden des Nutabschnittes an den beiden entgegengesetzten Stirnseiten des Rotormodules in Umfangsrichtung an entgegengesetzten Seiten der zugehörigen Längskante des Permanentmagneten angeordnet. Um aus solchen Rotormodulen einen Rotor mit durchgängigen Nuten zusammensetzen zu können, müssen entweder Rotormodule mit unterschiedlich, d. h. entgegengesetzt geneigten Nutabschnitten vorgesehen werden oder es müssen im Rotormodul selbst unterschiedlich, d. h. entgegengesetzt geneigte Nutabschnitte vorgesehen sein, so dass zwei Rotormodule, wenn sie in einem bestimmten Winkel gegeneinander verdreht sind, so aneinander gesetzt werden können, dass an ihrem Außenumfang durchgängige, zickzackförmige Nuten gebildet werden.

Alternativ ist es möglich, dass die Nutabschnitte an den Rotormodulen mit ihren Mittellinien jeweils die Längskante des angrenzenden Permanentmagnetsegmentes mehrfach kreuzen. In dem Fall, dass der Nutabschnitt mit seiner Mittellinie die Längskante des Permanentmagnetabschnittes zwei Mal oder in einer anderen geraden Anzahl von Malen kreuzt, sind die Enden der Nutabschnitte an den beiden Stirnenden des Rotormodules immer in der gleichen Umfangsrichtung von der Längskante des Permanentmagnetabschnittes beabstandet.

Weiter bevorzugt weist der Rotor zumindest zwei Rotormodule auf, welche in Richtung der Rotationsachse des Rotors unterschiedlich lang sind, wodurch eine feinere Abstufung der unterschiedlichen Rotorlängen, welche sich aus den Rotormodulen zusammensetzen lassen, erreicht werden kann.

Zumindest eines der Rotormodule weist bevorzugt Nutabschnitte auf, welche jeweils derart gewinkelt ausgebildet sind, dass die Mittellinien der Nutabschnitte an den beiden entgegengesetzten Stirnseiten des Rotormodules in Umfangsrichtung in der selben Richtung gleich weit von der Längskante des angrenzenden Permanentmagneten beabstandet sind. Eine derartige Anordnung ist insbesondere in dem oben beschriebenen Fall von Vorteil, in dem die Nutabschnitte mit ihren Mittellinien die angrenzenden Längskanten der Rotormodule zweimal oder in einer anderen geraden Anzahl von Malen kreuzt. Diese Anordnung ermöglicht, dass alle so ausgebildeten Rotormodule beliebig aneinandergesetzt werden können, wobei sich die Nutabschnitte der einzelnen Rotormodule an den Schnittstellen zwischen den einzelnen Rotormodulen treffen, so dass durchgängige Nuten am Außenumfang des Rotors gebildet werden können. Die Nutabschnitte der einzelnen Rotormodule schließen an den Schnittstellen zwischen den einzelnen Rotormodulen dabei vorzugsweise so aneinander an, dass an der Schnittstelle zwischen den Rotormodulen ein Winkel bzw. Knick in der Nut ausgebildet ist.

Die Nuten und/oder die Nutabschnitte verlaufen beispielsweise zickzackförmig zu der Längskante des angrenzenden Permanentmagneten oder Permanentmagnetabschnittes. Der zickzackförmige Verlauf der Nut kann sich entweder dadurch ergeben, dass Rotormodule mit entgegengesetzt geneigten Nutabschnittenaneinandergefügt werden oder dass bereits die Nutabschnitte selber in einem Rotormodul zickzackförmig verlaufen. Der zickzackförmige Verlauf der Nuten bzw. Nutabschnitte hat den Vorteil, dass bereits in jedem Rotormodul sichergestellt werden kann, dass sich der dort vorhandene Nutabschnitt in dem gewünschten Umfangsbereich bzw. Drehwinkel, über die Längskante des angrenzenden Permanentmagnetabschnittes erstreckt, um für einen geglätteten Drehmomentverlauf des Motors zu sorgen. Es können dann verschiedene auf diese Weise ausgebildete Rotormodule beliebig zusammengesetzt werden, um Rotoren unterschiedlicher Länge auszubilden, wobei stets sichergestellt ist, dass über die gesamte Rotorlänge die Längskanten der Permanentmagneten gleichmäßig von schrägverlaufenden Nuten überdeckt werden, um einen gleichmäßigen Drehmomentverlauf zu erzielen.

Vorzugsweise sind die Nuten jeweils derart ausgebildet, dass sie jeweils über die gesamte Rotorlänge zumindest die Längskante des angrenzenden Permanentmagneten in radialer Richtung im Wesentlichen überdecken. Das bedeutet, dass über die Rotorlänge gesehen an jeder Stelle des Rotors die äußeren Längskanten der Permanentmagneten am Außenumfang des Rotors von einer schrägverlaufenden Nut überdeckt werden. Die Nut hat vorzugsweise einen derartigen Neigungswinkel und eine derartige Nutbreite, dass sie trotz Neigung an jeder Stelle die Längskante des Permanentmagneten im Wesentlichen überdeckt bzw. kontaktiert. Dabei ist die Überdeckung so ausgebildet, dass von der Längskante des Permanentmagneten radial nach außen gesehen am Außenumfang des Rotors immer ein Teil der Nut vorhanden ist.

Weiter bevorzugt sind die Nuten derart angeordnet, dass jeweils eine Nut die radial äußeren Längskanten zweier benachbarter Permanentmagneten in radialer Richtung überdeckt. Diese Ausführungsform ist insbesondere für eine Anordnung von Permanentmagneten sinnvoll, bei welcher sich die Permanentmagneten in Richtung von Kreissehnen tangential im Inneren des Rotors erstrecken. Bei dieser Anordnung sind immer die Längskanten zweier aneinander angrenzender Permanentmagneten einander zugewandt und direkt zueinander benachbart. Die radial äußeren Längskanten zweier Permanentmagnete, welche aneinander angrenzen, können aufgrund des geringen Abstandes zwischen den Längskanten der Permanentmagneten von einer schrägverlaufenden Nut überdeckt werden. Dabei weist die Nut bzw. weisen die Nutabschnitte, aus denen die Nut gebildet ist, einen Neigungswinkel zur Rotorlängsachse und eine Nutbreite auf, welche so gewählt ist, dass an jeder Stelle entlang der Rotorlängsachse die beiden Längskanten der aneinander angrenzenden Permanentmagneten von der Nut in radialer Richtung überdeckt sind. D. h. ausgehend von den Längskanten in radialer Richtung nach außen befindet sich an jeder Stelle in Richtung der Rotorlängsachse ein Teil der Nut bzw. eines Nutabschnittes.

Weiter bevorzugt weisen die Nuten bzw. die die Nuten bildenden Nutabschnitte einen schwalbenschwanzförmigen Querschnitt auf. Diese Querschnittsform ermöglicht, dass die Nut am Außenumfang des Rotors eine möglichst geringe Breite aufweist, während sie sich zum Rotorinneren erweitert und im Bereich des Nutbodens die größte Breite in Umfangsrichtung aufweist. Dabei ist der Nutboden vorzugsweise so breit, dass an jeder Position in Richtung der Rotorlänge die Längskante des angrenzenden Permanentmagneten bzw. die Längskanten der aneinander angrenzenden Permanentmagneten von einem Teil des Nutbodens überdeckt werden.

Gemäß einer weiteren besonderen Ausführungsform sind angrenzend an die Längskanten der Permanentmagneten im umgebenden Material des Rotors Freiräume ausgebildet, welche vorzugsweise mit einer angrenzenden Nut in Verbindung stehen. Diese Freiräume an den Längskanten der Permanentmagneten verhindern bzw. verringern einen magnetischen Kurzschluss durch das Rotormaterial, so dass sichergestellt wird, dass der magnetische Fluss im Wesentlichen über den Stator verläuft.

Vorzugsweise ist der Rotor aus einer Vielzahl aufeinander geschichteter Rotorbleche ausgebildet, wobei die Freiräume lediglich in einem Teil der Rotorbleche ausgebildet sind und sich vorzugsweise zwischen zwei benachbarten Permanentmagneten erstrecken. Der Rotor bzw. dessen Rotormodule werden aus einzelnen Rotorblechen ausgebildet, welche beispielsweise im Stanzpaketierverfahren aufeinander geschichtet werden. Insbesondere, wenn Freiräume an den Längskanten der Permanentmagneten ausgebildet werden, welche mit den angrenzenden Nuten am Außenumfang des Rotors in Verbindung stehen, kann es bevorzugt sein, dass die Freiräume nicht in jedem Rotorblech ausgebildet sind, sondern dass in einzelnen Rotorblechen in den jeweiligen Bereichen Stege verbleiben, um die einzelnen Rotorsegmente zwischen den Permanentmagneten und den Nuten zusammenzuhalten.

Gemäß einer weiteren Ausführungsform der Erfindung sind der Rotor oder einzelne Rotormodule aus einer Vielzahl von Rotorblechen oder aus zusammengesetzten massiven, vorzugsweise gesinterten Segmenten gebildet, wobei zwischen den aneinander angrenzenden Segmenten Aufnahmeräume für die Permanentmagneten gebildet sind. Bei dieser Ausgestaltung erstrecken sich die Permanentmagnete in radialer Richtung speichenförmig zwischen den Rotorsegmenten. Vorzugsweise sind auch die schrägverlaufenden Nuten zwischen den einzelnen Rotorsegmenten ausgebildet, d. h. die Rotorsegmente weisen im Umfangsbereich des Rotors einen Abstand zueinander auf, welcher die Nut definiert. Um den Rotor aus mehreren Rotormodulen zusammensetzten zu können, können entsprechend die einzelnen Rotormodule aus Rotormodulsegmenten zusammengesetzt werden, wobei zwischen den Rotormodulsegmenten Permanentmagnetabschnitte angeordnet werden und am Außenumfang die schrägverlaufenden Nutabschnitte gebildet werden.

Weiter bevorzugt sind in zumindest einem Teil der Nuten oder in zusätzlichen im Rotor ausgebildeten Kanälen elektrische Leiter angeordnet. Bei einem modular aufgebauten Rotor können dazu in jedem Rotormodul entsprechende Nuten oder Kanäle mit darin angeordneten elektrischen Leitern vorgesehen sein, wobei beim Zusammensetzen der Rotormodule die einzelnen Leiterabschnitte an den Schnittstellen zwischen den Rotormodulen miteinander in Kontakt treten, um in Längsrichtung des Rotors durchgängige elektrische Leiter zu bilden. Die Leiter können beispielsweise durch Ausgießen der Nuten oder Kanäle mit Kupfer erzeugt werden. Diese Anordnung der Leiter ermöglicht die Ausgestaltung des Rotors zur Verwendung in einem Line-Start-Motor, welcher einen Hybridmotor darstellt, der beim Anlauf nach Art eines Asynchronmotors und im späteren Betrieb wie ein Permanentmagnetmotor betrieben wird. Bevorzugt sind die elektrischen Leiter in Kanälen am Außenumfang des Rotors angeordnet, wobei sich die Kanäle parallel zu den nach außen geöffneten Nuten erstrecken, d.h. ebenfalls zur Rotationsachse des Rotors in Umfangsrichtung schräg verlaufen. Die Kanäle, in denen die elektrischen Leiter angeordnet sind, können zum Außenumfang des Rotors hin geöffnet sein oder auch als geschlossene Kanäle im Inneren des Rotors ausgebildet sein.

Die Erfindung betrifft ferner ein Verfahren zur Herstellung eines Permanentmagnet-Rotors gemäß der vorangehenden Beschreibung. Gemäß diesem Verfahren wird der Rotor aus einer Vielzahl von Rotorblechen zusammengesetzt, wobei die einzelnen Rotorbleche in der Reihenfolge, in der sie zusammengesetzt werden nacheinander gestanzt werden. Vorzugsweise erfolgt das Stanzen der einzelnen Rotorbleche nacheinander aus einem Blechstreifen. Nach jedem Stanzvorgang wird das Werkzeug zum Stanzen der Nuten am Außenumfang des Rotors um einen vorbestimmten Winkel um seine Längsachse, welche der Rotordrehachse entspricht, gedreht. D. h. in jedem Blech ist die Nut um einen bestimmten Winkel gegenüber dem vorangehenden Blech in Umfangsrichtung versetzt. Wenn nun die einzelnen Bleche aufeinander gestapelt werden, ergeben sich durch die versetzt ausgestanzten Nutabschnitte die bezüglich der Längskanten der Permanentmagnete geneigten Nuten am Außenumfang des Rotors. Beim Stanzen wird gleichzeitig in jedem Rotorblech eine Anzahl von Ausnehmungen für die Permanentmagnete eingestanzt. Diese Ausnehmungen werden vorzugsweise in jedem Rotorblech an der gleichen Winkelposition eingestanzt, d. h. das Werkzeug zum Stanzen der Ausnehmungen wird nicht wie das Werkzeug zum Ausstanzen der Nuten nach jedem Stanzvorgang verdreht. Auf diese Weise können die Permanentmagneten nach Zusammensetzen der Rotorbleche in Längsrichtung des Rotors so in den Rotor eingeschoben werden, dass sich die Permanentmagnete parallel zur Rotorlängsachse erstrecken. Die Permanentmagneten haben vorzugsweise eine Länge, welche jeweils der Länge des Rotors in Richtung der Rotationsachse des Rotors entspricht.

Weiter bevorzugt wird der Rotor aus zumindest zwei vorgefertigten Rotormodulen zusammengesetzt. Dabei werden die einzelnen Rotormodule, wie vorangehend für den gesamten Rotor beschrieben, jeweils aus einer Vielzahl von Rotorblechen zusammengesetzt. Die einzelnen Rotorbleche eines Rotormodules werden in der Reihenfolge, in der sie zusammengesetzt werden, nacheinander gestanzt. Dabei wird das Werkzeug zum Stanzen der Nuten am Außenumfang des Rotors nach jedem Stanzvorgang um einen vorbestimmten Winkel um seine Längsachse, gedreht. Dadurch werden in jedem Blech des Rotormoduls umfänglich zueinander versetzte Teile der Nuten gestanzt. Wenn die einzelnen Bleche des Rotormoduls aufeinander gesetzt werden, werden durch die in jedem Rotorblech versetzt eingestanzten Nutteile die am Außenumfang des Rotormoduls ausgebildeten geneigten Nutabschnitte ausgebildet. Nach dem Zusammensetzen der Rotorbleche zu einem Rotormodul werden in das Rotormodul zur Länge des Rotormoduls passende Permanentmagnetabschnitte eingesetzt. Für die Permanentmagnetabschnitte sind in den Rotorblechen Ausnehmungen eingestanzt, welche in jedem Rotorblech in derselben Winkelposition vorgesehen sind, so dass die Permanentmagnetabschnitt parallel zur Rotationsachse des Rotors in das Rotormodul eingeschoben werden können.

Weiter bevorzugt werden zum Ausbilden von Rotoren mit unterschiedlichen Längen Rotormodule bestimmter Längen vorgefertigt. Die vorgefertigten Rotormodule können dann nach gewünschter auszubildender Rotorlänge in verschiedenen, vorzugsweise beliebigen Kombinationen aneinandergefügt werden. Die einzelnen Rotormodule sind so vorgefertigt, dass in ihnen Permanentmagnetabschnitte angeordnet sind, welche sich parallel zur Rotationsachse des Rotormoduls über dessen axiale Länge erstrecken. Ferner weisen die Rotormodule jeweils am Außenumfang Nutabschnitte auf, die zu einer radial äußeren Längskante eines angrenzenden Permanetmagnetabschnittes geneigt sind, wobei sich die Permanentmagnetabschnitte beispielsweise in Richtung einer Kreissehne oder radial im Inneren des Rotormoduls erstrecken können. Je nach gewünschter Rotorlänge wird eine unterschiedliche Anzahl von Rotormodulen in Längsrichtung aneinandergefügt, wobei die Permanentmagnetabschnitte der einzelnen Rotormodule vorzugsweise fluchtend zueinander angeordnet sind, so dass im Rotor Permanentmagnete gebildet werden, welche sich über die gesamte Rotorlänge parallel zur Drehachse des Rotors durch den Rotor erstrecken. Die Nutabschnitte der einzelnen Rotormodule schließen dabei, wie oben beschrieben vorzugsweise so aneinander an, dass durchgehende, sich über die gesamte Rotorlänge erstreckende geneigte Nuten, welche ggf. zickzackförmig verlaufen, gebildet werden. Dabei überdecken die Nuten vorzugsweise über die ganze Rotorlänge die Längskanten der angrenzenden Permanentmagnete.

Beispielsweise sind zumindest zwei, vorzugsweise drei Arten von Rotormodulen mit unterschiedlicher Modullänge vorgesehen. D. h. die mehreren, vorzugsweise drei unterschiedlich lang ausgebildeten Rotormodule können beliebig miteinander kombiniert werden, um die sich aus den gegebenen Abstufungen ergebenden Rotorlängen je nach Bedarf herstellen zu können.

Vorzugsweise ist die Abstufung so gewählt, dass eine zweite Art von Rotormodulen eine Modullänge aufweist, welche um die Hälfte länger als die Modullänge einer ersten Art von Rotormodulen ist. Dabei ist vorzugsweise auch eine dritte Art von Rotormodulen vorgesehen, welche eine Modullänge aufweist, welche die doppelte Länge der Modullänge der ersten Art von Rotormodulen hat. Daraus ergibt sich eine Abstufung für die unterschiedlichen Rotorlängen, welche aus diesen Rotormodulen zusammengesetzt werden können, welche der Hälfte der Modullänge der ersten Art von Rotormodulen entspricht.

Nachfolgend wird die Erfindung beispielhaft anhand der beigefügten Figuren beschrieben. In diesen zeigen:
- Fig. 1: eine schematische perspektivische Ansicht eines Rotors gemäß einer ersten Ausführungsform der Erfindung,
- Fig. 2: eine schematische perspektivische Ansicht eines Rotors gemäß einer zweiten Ausführungsform der Erfindung,
- Fig. 3: eine perspektivische Ansicht eines Rotors gemäß einer dritten Ausführungsform der Erfindung
- Fig. 4: eine Detailansicht des Rotors gemäß Fig. 3,
- Fig. 5: ein erstes Rotorblech des Rotors gemäß Fig. 3 und 4,
- Fig. 6: ein zweites Rotorblech des Rotors gemäß Fig. 3 und 4,
- Fig. 7: eine perspektivische Ansicht eines Rotors gemäß einer weiteren Ausführungsform,
- Fig. 8: eine Detailansicht des Rotors gemäß Fig. 7,
- Fig. 9: eine perspektivische Ansicht eines Rotors gemäß einer weiteren Ausführungsform der Erfindung,
- Fig. 10: eine Detailansicht des Rotors gemäß Fig. 9
- Fig. 11: ein Rotorblech eines erfindungsgemäßen Rotors,
- Fig. 12: schematisch das Zusammensetzen eines erfindungsgemäßen Rotors und
- Fig. 13: schematisch die Ausbildung von Rotoren verschiedener Länge aus vorgefertigten Rotormodulen.

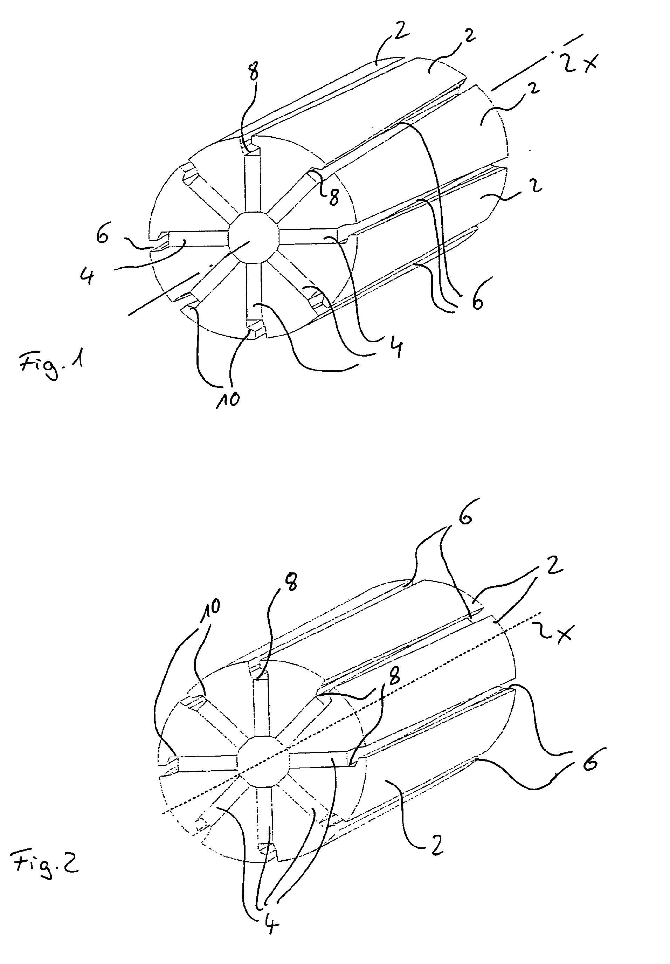

Der in Fig. 1 gezeigte Rotor ist aus acht identischen Rotorsegmenten 2 aufgebaut, welche beispielsweise als Sintermetallteile gefertigt werden können. Die Rotorsegmente 2 sind konisch ausgebildet und abwechselnd um 180° gedreht zueinander angeordnet, so dass immer ein Rotorelement mit seiner breiten Stirnseite zwischen den schmalen Stirnseiten zweier angrenzender Rotorelemente 2 zu liegen kommt. Die Rotorsegmente 2 sind jeweils beabstandet zueinander angeordnet, so dass zwischen den Rotorsegmenten 2 sich in radialer Richtung erstreckende Freiräume ausgebildet sind, in denen Permanentmagnete 4 angeordnet sind. Die Permanentmagnete 4 erstrecken sich in radialer Richtung und sind somit insgesamt sternförmig angeordnet. Dabei erstrecken sich die Permanentmagnete 4 in radialer Richtung nicht bis zum Außenumfang des Rotors. Vielmehr sind die Freiräume zwischen den Rotorsegmenten 2 radialseitig der Permanentmagnete 4 als Nuten 6 ausgebildet, welche zum Außenumfang des Rotors hin geöffnet sind. Die Nuten 6 sind so ausgebildet, dass sie am Außenumfang eine konstante Spaltbreite über die gesamte Länge des Rotors entlang der Drehachse X des Rotors 6 aufweisen. Ferner erstrecken sich die Nuten 6 schräg über den Umfang des Rotors, so dass sie bezüglich der radial äußeren Längskanten 8 der Permanentmagnete 4 geneigt verlaufen. Die Nuten 6 verlaufen somit gedreht bzw. schraubenförmig auf dem Umfang des Rotors. Dieser schräge Verlauf der Nuten 6 wird durch die konische Ausgestaltung der Rotorsegmente 2 erreicht, d. h. dass die Rotorsegmente 2 an einem Längsende eine kleinere Querschnittsfläche aufweisen als am entgegengesetzten Längsende.

Die Nuten 6 sind ferner so ausgebildet, dass sie am Außenumfang eine geringere Breite aufweisen als am radial weiter innen liegenden Nutboden, d. h. dem an die Permanentmagneten 4 anschließenden Bereich. Dies wird durch eine stufenförmige Erweiterung der Nut an einem Längsende der Rotorsegmente 2 erreicht. Bei der konischen Ausgestaltung der Rotorsegmente 2 ist die stufenförmige Erweiterung 10 jeweils an dem Längsende des Rotorsegmentes 2 mit der größeren Querschnittsfläche ausgebildet. Die stufenförmige Erweiterung 10 läuft mit der Verjüngung des Rotorsegmentes 2 zum entgegengesetzten Längsende hin aus, so dass an diesem entgegengesetzen Ende 2 die stufenförmige Erweiterung 10 nicht mehr vorhanden ist. Dadurch, dass die Rotorsegmente 2 immer abwechselnd um 180° gedreht angeordnet werden, wird im Verlauf jeder Nut 6 erreicht, dass die stufenförmige Erweiterung 10 im Verlauf der Nut von der einen Nutseite zu der anderen Nutseite hin wechselt, entsprechend dem geneigten Verlauf der Nuten 6.

Durch die beschriebene Ausgestaltung wird erreicht, dass die gesamte Länge des Rotors in Richtung der Drehachse X die radial äußeren Längskanten 8 bzw. die radial nach außen gerichtete Stirnfläche der Permanentmagneten 4 von Nuten 6 überdeckt werden, so dass die Freiräume der Nuten angrenzend an die Permanentmagnete 6 eine magnetische Isolierung bilden, welche den magnetischen Kurzschluss zwischen Nord- und Südpol des Magneten im Inneren des Rotors, d. h. durch die Rotorsegmente 2 hindurch unterbindet. Dadurch wird der magnetische Fluss über den Stator des Motors (hier nicht gezeigt) und damit ein höherer Motorwirkungsgrad sichergestellt. Zum Außenumfang hin sind die Nuten schmaler ausgebildet, so dass hier der magnetische Fluss möglichst wenig durch die Nuten unterbrochen wird und so ein möglichst gleichmäßiger Drehmomentverlauf des Motors erzielt werden kann.

Während bei dem in Fig. 1 gezeigten Rotor aufgrund der konischen Ausgestaltung der Rotorsegmente 2 die Nuten 6 am Außenumfang des Rotors abwechselnd in entgegengesetzter Richtung entlang des Umfangs des Rotors geneigt sind, ist der in Fig. 2 gezeigte Rotor so ausgebildet, dass alle Nuten 6 im Verlauf von der einen Stirnseite des Rotors zu der entgegengesetzten Stirnseite in derselben Umfangsrichtung geneigt verlaufen. Wie auch bei Fig. 1 verlaufen die Nuten dabei gerade und sind in einem Winkel zu den Längskanten 8 der angrenzenden Permanentmagnete 4 geneigt. Die Anordnung der Permanentmagnete 4 zwischen den Rotorsegmenten 2 entspricht der Anordnung gemäß Fig. 1. Bei der Ausführungsform gemäß Fig. 2 sind ebenfalls alle Rotorsegmente 2 identisch, vorzugsweise als Sinterbauteile ausgebildet. Im Unterschied zu der Ausführungsform gemäß Fig. 1 sind die Rotorsegmente 2 jedoch alle in derselben Richtung angeordnet, so dass die gleich geneigten Nuten 6 zwischen den Rotorsegmenten 2 gebildet werden. Auch bei dieser Ausführungsform weisen die Nuten 6 eine stufenförmige Erweiterung 10 in dem den Permanentmagneten 4 zugewandten Bereichen auf.

Jede stufenförmigen Erweiterung 10 an den Rotorsegmenten 2 ist so ausgebildet, dass sie an einer Stirnseite der Rotorsegmente 2 jeweils an einer Längskante der Rotorsegmente 2 ausgebildet ist. Im Verlauf der Längskante nimmt die Erweiterung 10 bis zur entgegengesetzten Stirnseite ab, so dass dort an derselben Längskante keine Erweiterung mehr ausgebildet ist. Umgekehrt ist die entgegengesetzte Längskante des Rotorsegmentes 2 so ausgebildet, dass die Erweiterung 10 über den Verlauf der Längskante zunimmt, so dass an dieser Längskante der Rotorsegmente an der ersten Stirnseite keine Erweiterung und an der entgegengesetzten Stirnseite eine Erweiterung 10 ausgebildet ist. Somit sind die Rotorsegmente an ihren beiden Stirnseiten identisch ausgebildet, so dass sie punktsymmetrisch zur Mitte der Rotorsegmente 2 ausgebildet sind und die Rotorsegmente 2 somit beliebig um 180° gedreht zusammengesetzt werden können. Auch bei dieser Anordnung ist durch die schmale Ausgestaltung der Nuten am Außenumfang sichergestellt, dass dort der magnetische Fluss zum Stator möglichst wenig durch gestört wird, während die breite Ausgestaltung der Nuten an den radial äußeren Stirnflächen der Permanentmagneten 4 dafür sorgt, dass dort eine ausreichende magnetische Isolierung gegeben ist. Die Nuten 6 überdecken über die gesamte Rotorlänge in radialer Richtung die Längskanten 8 bzw. die radial äußeren Stirnflächen der Permanentmagneten 4.

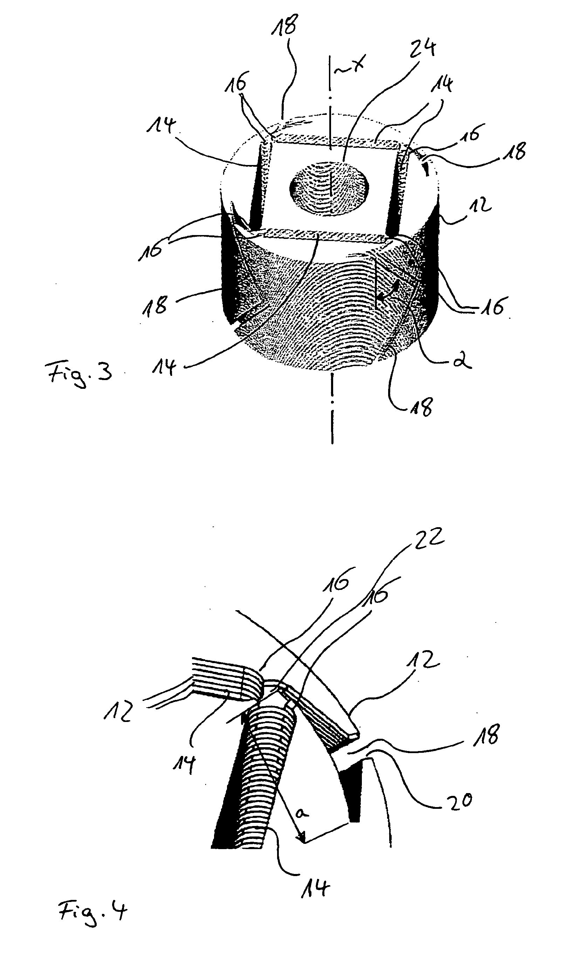

Fig. 3 zeigt einen Rotor, welcher aus einer Vielzahl von Rotorblechen besteht, welche in Richtung der Drehachse X des Rotors aufeinandergesetzt sind. In den Rotorblechen 12 sind jeweils vier Schlitze 14 ausgebildet, welche sich in Richtung einer Kreissehne, d. h. normal zum Radius in den Rotorblechen erstrecken. Die Schlitze 14 sind in jedem Rotorblech 12 an derselben Winkelposition bezüglich der Drehachse X angeordnet, so dass die Schlitze 14 bei aufeinander gestapelten Rotorblechen 12 sich in Längsrichtung durch den Rotor erstreckende Ausnehmungen bilden, in welche Permanentmagnete so eingesetzt werden können, dass sie sich parallel zur Drehachse X erstrecken.

Im Bereich der Stirnkanten 16 der Schlitze 14, d. h. der radial außenliegenden Längskanten 16 der von den Schlitzen 14 gebildeten Ausnehmungen sind am Außenumfang des Rotors Nuten 18 ausgebildet, welche in ihrer Funktion den anhand der Fig. 1 und 2 beschriebenen Nuten entsprechen. Bei der Ausführungsform gemäß Fig. 3 verlaufen die Nuten 18 V- bzw. zickzackförmig, so dass sie den Bereich der Längskanten 16 der Schlitze 14 über der Länge des Rotors zweimal kreuzen. Wie in der Vergrößerung in Fig. 4 deutlicher zu erkennen ist, sind die Nuten 18 schwalbenschwanzförmig im Querschnitt ausgebildet. Das bedeutet, die Nuten 18 weisen im Bereich der Öffnung zum Außenumfang des Rotors hin in Umfangsrichtung eine schmale Nutbreite auf, so dass nur ein schmaler geöffneter Spalt zum Außenumfang gerichtet ist. Ausgehend von diesem Spalt 20 erweitert sich die Nut 18 radial nach innen, so dass sie am Nutboden, d. h. dem den Längskanten 16 der Schlitze 14 zugewandten Bereich eine wesentlich größere Nutbreite in Umfangsrichtung aufweist. Diese Nutbreite a am Nutboden, welche in ihrer Funktion der Erweiterung 10 bei den Ausführungsbeispielen gemäß Fig. 1 und 2 entspricht, ist auf den Neigungswinkel a der Nut bezüglich der Rotorlängsrichtung bzw. der Kanten 16 abgestimmt. Die Nutbreite a ist so gewählt, dass bei der Neigung der Nut im Neigungswinkel a über die gesamte Erstreckung der Nut in der Richtung parallel zur Drehachse X die Längskanten 16 der Schlitze 14 in radialer Richtung von der Nut bzw. dem Nutboden überdeckt werden. D. h. an einem Ende der Nut grenzt die Nut mit einer umfänglichen Seitenkante des Nutbodens an die Kanten 16 an. Am entgegengesetzten Ende der Nut in Richtung der Drehachse X grenzt die Nut mit dem in Umfangsrichtung entgegengesetzten Ende des Nutbodens an die Kanten 16 der Schlitze 14 an. Dies ist bei dem in Fig. 3 gezeigten Rotor in der Mitte der Rotorlängsrichtung der Fall, da sich dort der Winkel ändert und die Nut im entgegengesetzten Winkel zurückläuft, so dass an den beiden Stirnenden die Nut relativ zu den angrenzenden Kanten 16 der Schlitze 14 gleichgelegen ist.

In Fig. 4 ist ferner zu erkennen, dass in jedem zweiten Rotorblech 12 die Nut 18 direkt mit den angrenzenden Schlitzen 14 durch einen zusätzlichen Freiraum 22 verbunden ist. Dieser Freiraum 22 führt dazu, dass in demjenigen Rotorblech, in dem ein Freiraum 22 ausgebildet ist, die Teile des Rotorblechs an den beiden Polen eines in den Schlitz 14 eingesetzten Permanentmagneten nicht über das Rotorblech in Verbindung stehen. So wird durch den Freiraum 22 eine magnetische Isolierung geschaffen, welche einen magnetischen Kurzschluss im Inneren des Rotors unterbinden. In jedem zweiten Rotorblech ist auf den Freiraum 22 verzichtet. Dies dient dazu, um Stege zu behalten, welche die einzelnen Teile des Rotors zusammenhalten.

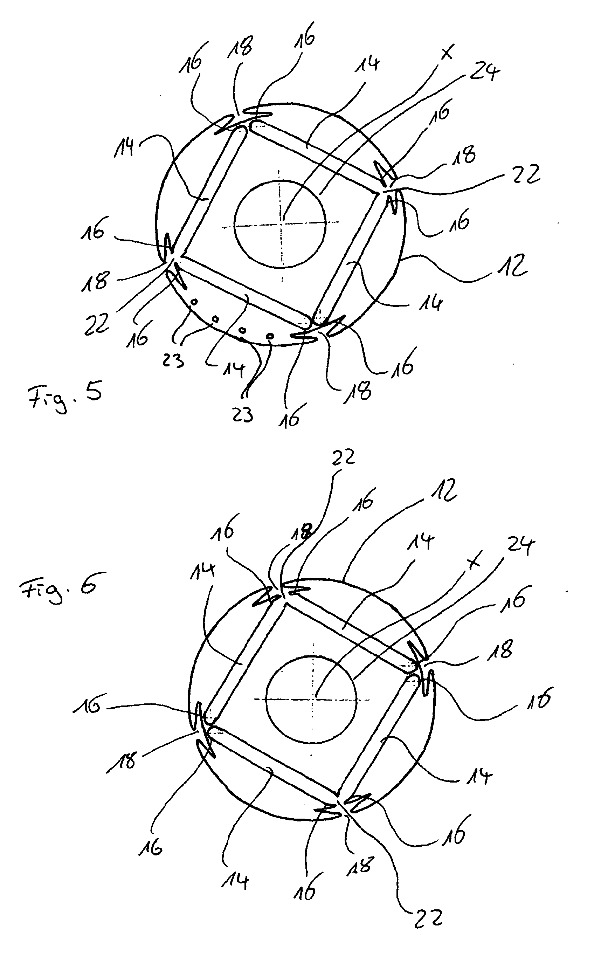

Fig. 5 und 6 zeigen zwei verschiedene Rotorbleche des anhand der Fig. 3 und 4 beschriebenen Rotors. Bei den in Fig. 5 und 6 gezeigten Rotorblechen 12 handelt es sich um zwei Rotorbleche 12, welche im Rotor direkt aufeinander zu liegen kommen. Im Zentrum des Rotorbleches ist ein kreisförmiges Loch 24 ausgebildet, welches zur Aufnahme der Rotorwelle dient. In Fig. 5 und 6 ist zu erkennen, wie die Nuten 18 die Kanten 16 der Schlitze 14 in radialer Richtung überdecken. Ferner ist erkennbar, dass jeweils an zwei der Nuten 18 ein Freiraum 22 anschließt, welcher die Nuten 18 direkt mit den angrenzenden Schlitzen 14 verbindet. An den beiden anderen Nuten 18 ist auf diesen Freiraum verzichtet, um ein Auseinanderfallen des Rotorbleches zu verhindern. Bei dem in Fig. 6 gezeigten Rotorblech ist entsprechend an den beiden anderen Nuten 18, bei welchen bei dem Rotorblech 12 gemäß Fig. 5 kein Freiraum 22 vorgesehen ist, ein Freiraum 22 ausgebildet. So ist abwechselnd jeweils an einer Nut 18 in einem Rotorblech ein Freiraum ausgebildet, im nächsten Blech kein Freiraum ausgebildet und im nachfolgenden Blech wieder ein Freiraum ausgebildet usw. Der Versatz der Nuten 18 in Umfangsrichtung zwischen den beiden Blechen in Fig. 5 und 6 ist aufgrund des geringen Winkels bei direkt aufeinander liegenden Rotorblechen 12 nicht erkennbar.

In Fig. 5 ist ferner schematisch eine spezielle Ausgestaltung des Rotors für die Verwendung in einem Line-Start-Motor angedeutet. Für diese Verwendung können im Rotor nahe des Außenumfanges zusätzliche Kanäle 23 ausgebildet sein, welche gleichmäßig um den Umfang des Rotors zwischen den Nuten 18 verteilt sind. In Fig. 5 sind die Kanäle 23 lediglich zwischen zwei Nuten 18 dargestellt, es ist jedoch zu verstehen, dass die Kanäle 23 entsprechend über den gesamten Umfang des Rotors verteilt angeordnet sind. Die Kanäle 23 erstrecken sich vorzugsweise parallel zu den Nuten 18 und beinhalten elektrische Leiter. Dazu sind die Kanäle 23 vorzugsweise mit Kupfer ausgegossen. Diese Anordnung der elektrischen Leiter ermöglicht den Betrieb des Motors beim Anlauf nach Art eines Asynchronmotors, wobei nach dem Anlauf der Motor dann wie ein Permanentmagnetmotor betrieben wird. Es ist zu verstehen, dass die zusätzlichen Kanäle 23 optional angeordnet werden können, d.h. auch bei dem Rotor, dessen Rotorbleche in Figuren 5 und 6 gezeigt sind, nicht unbedingt vorhanden sein müssen.

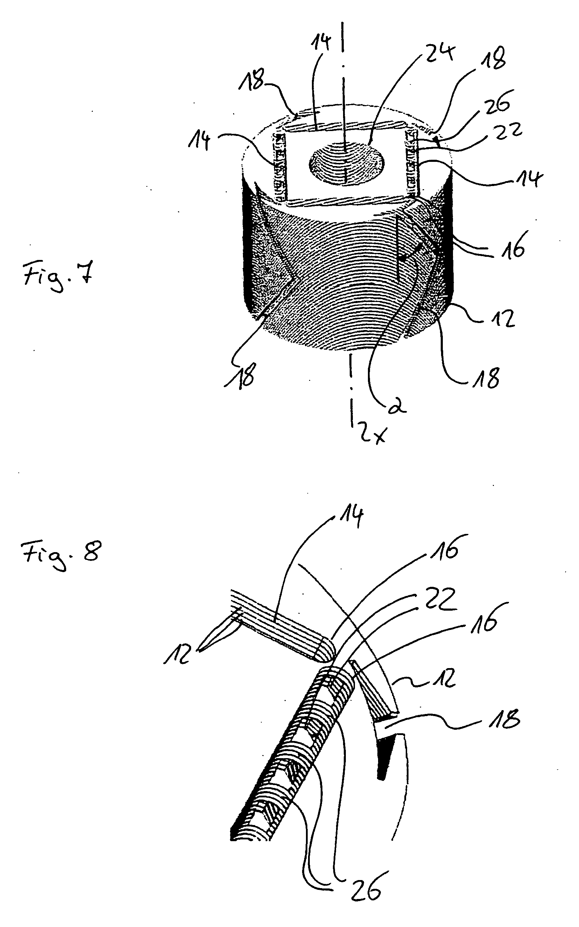

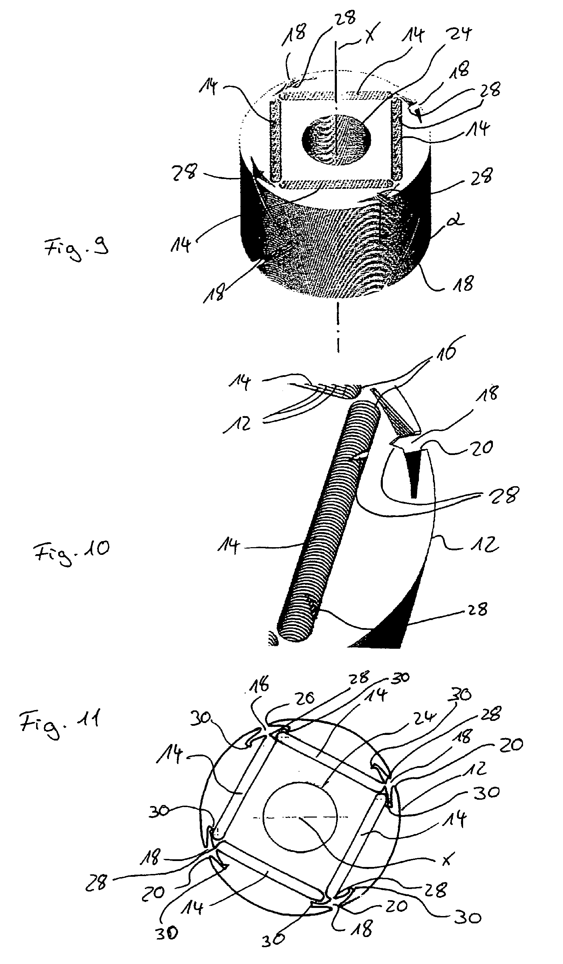

Anstatt der abwechselnden Anordnung der Freiräume 22, wie sie anhand von Fig. 3 und 4 beschrieben wurde, ist es auch möglich, immer mehrere Rotorbleche 12 mit dem Freiraum 22 an derselben Nut 18 aufeinander zustapeln, wie in Fig. 7 und 8 gezeigt ist. Der in Fig. 7 gezeigte Rotor entspricht im Wesentlichen dem anhand von Fig. 3 bis 6 beschriebenen Rotor mit dem einzigen Unterschied, dass hier die Freiräume 22 in Richtung der Drehachse X länger ausgebildet sind, indem immer mehrere Rotorbleche 12 mit dem Freiraum 22 an derselben Nut aufeinander geschichtet sind und erst danach sich mehrere Rotorbleche 12 anschließen, welche an dieser Nut keinen Freiraum 22 haben. Auf diese Weise bilden die Freiräume 22 in Richtung der Drehachse X längere Durchbrechungen zwischen den angrenzenden Schlitzen 14 und der Nut 18, welche jeweils von in Richtung der Drehachse X längeren Verbindungsstegen 26 getrennt sind.

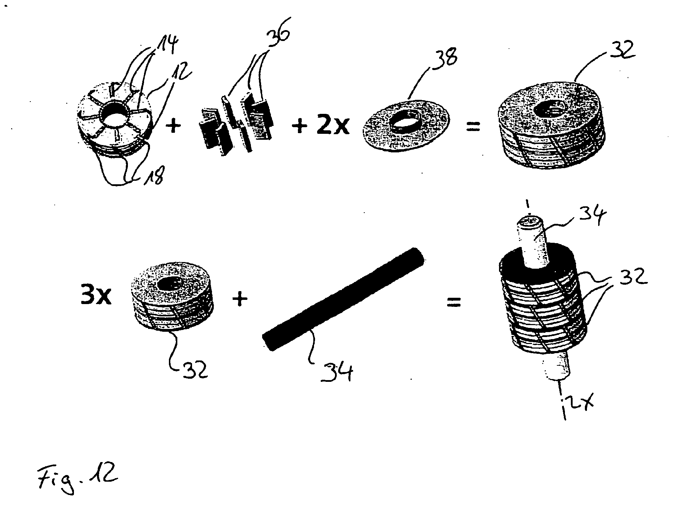

Eine weitere Ausführungsform, welche auf der anhand der Fig. 3 bis 8 beschriebenen Ausführungsform basiert, ist in Fig. 9 und 10 gezeigt. Auch bei diesem Rotor handelt es sich um einen Rotor, welcher aus einer Vielzahl von Rotorblechen 12 besteht. In diesen Rotorblechen sind Schlitze 14 und Nuten 18 wie vorangehend anhand der Fig. 3 bis 8 beschrieben ausgebildet. Im Unterschied zu den vorangehend beschriebenen Rotoren sind bei dem Rotor gemäß Fig. 9 und 10 keine Freiräume 22 an den in Umfangsrichtung gelegenen Enden der Nuten ausgebildet, sondern in der Mitte der Nuten 18 in radialer Verlängerung des Spaltes 20 in Längsrichtung der Nuten 18 Kerben 28 ausgebildet, welche soweit radial nach innen in das Rotorblech eindringen, dass sie abschnittsweise die Schlitze 14 berühren und so eine Verbindung zwischen dem Schlitz 14 und der Nut 18 herstellen. Die Berührung des Schlitzes 14 mit der Nut 18 findet im Wesentlichen in dem Bereich statt, in dem die Mitte der Nut, d. h. der Bereich in radialer Verlängerung des Spaltes 20 auf derselben Radiuslinie wie die Kante 16 des Schlitzes 14 liegt. Auch die Kerben 28 haben den Zweck das weichmagnetische Material des Rotorbleches 12 an der Stirnseite, d. h. im Bereich der Kanten 16, der Schlitze 14 zu unterbrechen, um den magnetischen Fluss zwischen den radial entgegengesetzt liegenden Polen des Magnetes im Inneren des Rotors zu unterbinden bzw. zu verringern.

Fig. 11 zeigt ein Rotorblech eines Rotors ähnlich denen in Fig. 9 und 10 in einer Aufsicht. Bei diesem Rotorblech 12 sind zusätzlich zu den Kerben 28 noch weitere radial nach innen gerichtete Kerben 30 an den in Umfangsrichtung entgegengesetzt liegenden Längskanten der Nuten 18 ausgebildet. Hierdurch werden noch größere Einschnitte in das weichmagnetische Material zur Unterbindung des magnetischen Flusses bzw.

Kurzschlusses im Inneren des Rotors zwischen den in die Schlitze 14 eingesetzten Permanentmagneten erreicht. Wie in Fig. 11 ferner zu sehen ist, kontaktieren die Kerben 28 immer nur einen der beiden an eine Nut 18 angrenzenden Schlitze 14. Auf diese Weise wird sichergestellt, dass zwischen allen Bereichen des Rotorbleches 12 Stege verbleiben, um das Rotorblech und somit den fertigen Rotor zusammenzuhalten.

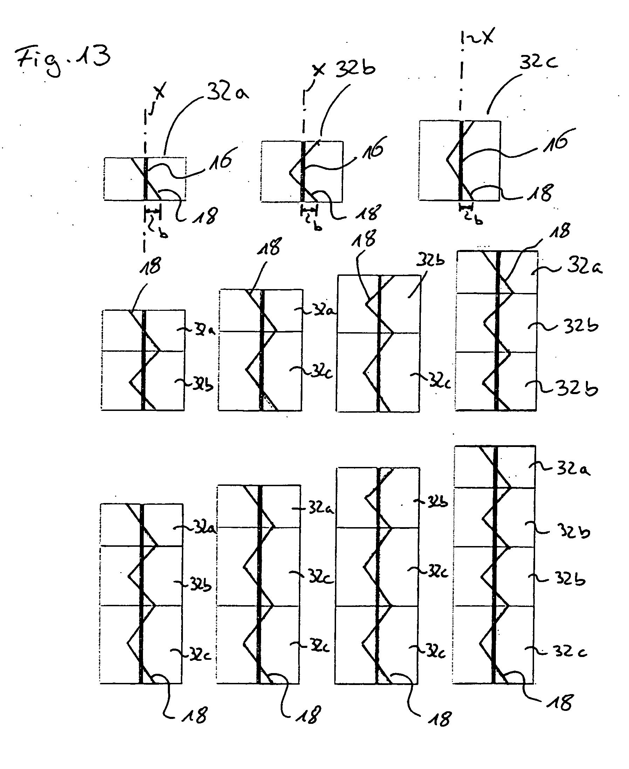

Anhand von Fig. 12 und 13 wird nun nachfolgend der modulare Aufbau eines erfindungsgemäßen Rotors beschrieben. Die Idee des modularen Rotoraufbaus liegt darin, dass einzelne Rotormodule 32 vorgefertigt werden und anschließend die vorgefertigten Rotormodule 32 zu einem vollständigen Rotor mit einer Rotorwelle 34 zusammengesetzt werden. Dies ermöglicht, je nach gewünschter Rotorlänge einfach unterschiedliche Anzahlen von vorgefertigten Rotormodulen 32 zusammenzusetzen. Ferner können auch, wie anhand von Fig. 13 beschrieben werden wird unterschiedlich lange Rotormodule 32 vorgefertigt werden, welche dann in gewünschten Kombinationen zusammengefügt werden können, um die gewünschte Rotorlänge auszubilden.

In Fig. 12 oben ist gezeigt, wie ein Rotormodul 32 aufgebaut wird. Jedes Rotormodul 32 besteht aus einer Vielzahl von aufeinander geschichteten Rotorblechen 12. Bei dem in Fig. 12 gezeigten Beispiel sind in den Rotorblechen 12 radial gerichtete Schlitze 14 für die Permanentmagnete bzw. Permanentmagnetabschnitte 36 vorgesehen. D. h. bei dem hier beschriebenen Rotor werden die Permanentmagnete 36 sternförmig in radialer Richtung angeordnet. Alternativ kann der beschriebene modulare Aufbau jedoch auch bei einer Anordnung der Schlitze 14 erfolgen, welche der anhand der Fig. 3 bis 10 beschriebenen Anordnung entspricht. Ferner kann der modulare Aufbau auch mit Rotorsegmenten 2 realisiert werden, wie sie anhand der Fig. 1 und 2 beschrieben worden sind, wobei dazu Rotorsegmente 2 in der Länge des Rotormoduls 32 in Richtung der Drehachse X vorgefertigt werden.

Ferner sind in dem Rotormodul und entsprechend in dem gezeigten Beispiel in den Rotorblechen 12 Nuten 18 in der zuvor beschriebenen Weise ausgebildet. Dabei verlaufen die Nuten 18 schräg bzw. geneigt in Umfangsrichtung, wobei sie die radialen Außenkanten der Schlitze 14 über die gesamte Länge des Rotormoduls 32 in Richtung der Achse X überdecken. Dabei sind Nutbreite a und Neigungswinkel a, wie vorangehend beschrieben, so aufeinander abgestimmt, dass die Nut an der einen Stirnseite des Rotormoduls 32 mit ihrem einen Umfangsende gerade noch die radiale Stirnseite des Schlitzes 14 überdeckt und an der anderen Stirnseite des Rotormoduls 32 die Nut 18 mit dem in Umfangsrichtung entgegengesetzten Ende die Stirnseite des Schlitzes 14 gerade noch überdeckt. Somit entspricht ein Rotormodul 32 der Hälfte des in Fig. 3, 7 und 9 gezeigten Rotors in Richtung der Drehachse X. In die aufeinander geschichteten Rotorbleche 12 werden in Längsrichtung die Permanentmagnetabschnitte 36 eingesetzt. Anschließend wird das Blechpaket an beiden Stirnseiten mit Abdeckscheiben 38 versehen, um ein Rotormodul 32 zu bilden. Ggf. kann auf die Abdeckscheiben 38 auch verzichtet werden. Im in Fig. 12 gezeigten Beispiel werden dann drei auf diese Weise vorgefertigte Rotormodule 32 auf eine Rotorwelle 34 aufgesetzt, um einen Rotor mit einer Länge von 3 Rotormodulen 32 auszubilden. Dabei werden die Rotormodule 32 so zueinander angeordnet, dass die Permanentmagnetabschnitte 36 der einzelnen Rotormodule 32 miteinander fluchten, d. h. sich ähnlich wie durchgängige Permanentmagneten über die gesamte Rotorlänge parallel zur Drehachse X erstrecken.

Anhand von Fig. 13 wird nun ein Aufbau unterschiedlich langer Rotoren aus unterschiedlich langen vorgefertigten Rotormodulen 32a, 32b und 32c beschrieben, wobei die einzelnen Rotormodule 32 wie anhand von Fig. 12 erläutert aufgebaut werden. Der Einfachheit halber sind in Fig. 13 die Nuten 18 nur anhand ihrer Mittellinien gekennzeichnet. Ferner sind auch nur schematisch die Längskanten der Schlitze 14 bzw. der Permanentmagneten bzw. Permanentmagnetabschnitte 36 dargestellt. An jedem Rotor sind nur eine Längskante 16 und eine Nut 18 dargestellt. Es ist zu verstehen, dass jeder Rotor über seinen Umfang verteilt mehrere Permanentmagnete und zugehörige Längskanten 16 sowie Nuten 18 aufweist.

Wie in Fig. 13 oben gezeigt sind drei unterschiedlich lange Rotormodule 32a, 32b und 32c vorgesehen, welche aus einer Vielzahl von Rotorblechen 12 oder aus Rotorsegmenten 2, wie anhand von Fig. 1 und 2 erläutert, aufgebaut werden können. Im gezeigten Beispiel sind die Längen so gestuft, dass das Rotormodul 32b um die Hälfte länger als das Rotormodul 32a in Richtung der Drehachse X ist. Das Rotormodul 32c weist die doppelte Länge des Rotormoduls 32a in dieser Richtung auf. Im Rotormodul 32a erstrecken sich die Nuten 18 am Außenumfang in nur einer Richtung geneigt. Bei den Rotormodulen 32b und 32c erstrecken sich die Nuten 18 zickzackförmig, wie anhand der Fig. 3 bis 11 erläutert. Die Nuten 18 in den drei unterschiedlich langen Rotormodulen 32a, 32b und 32c sind in unterschiedlichen Winkeln zur Längsachse des Rotors geneigt, so dass der Abstand d zwischen der Längskante 16 und der Nut 18 an den Stirnseiten der Rotormodule 32a, 32b und 32c in Umfangsrichtung bei allen drei unterschiedlich lang ausgebildeten Rotormodulen gleich ist. Dies ermöglicht, dass die Rotormodule 32a, 32b und 32c in beliebigen Kombinationen in Längsrichtung aneinandergefügt werden können, wobei die Nutabschnitte bzw. Nuten 18 der einzelnen Rotormodule 32a, 32b, 32c an den Schnittstellen berühren bzw. aneinander anschließen, so dass bei dem fertigen Rotor eine durchgehende, ggf. zickzackförmige Nut 18 gebildet wird. Wenn mehrere Rotormodule 32a, bei welchen die Nuten bzw. der Nutabschnitte 18 im Rotormodul gerade und nicht zickzackförmig verlaufen, aneinandergefügt werden, ist dies nicht möglich, dann verlaufen die Nuten alle in derselben Richtung geneigt, wie in Fig. 12 gezeigt.

Wie in Fig. 13 gezeigt ist, lassen sich aus den Rotormodulen 32a, 32b und 32c verschieden lange Rotoren zusammensetzen, wobei die Längenabstufung der ausbildbaren Rotoren der halben Länge des Rotormoduls 32a in Richtung der Drehachse X entspricht. Wie in den acht gezeigten Beispielen der Kombinationen der unterschiedlichen Rotormodule 32a, 32b und 32c zu erkennen ist, schließen die Nuten 18 der einzelnen Rotormodule 32a, 32b, 32c immer aneinander an, so dass über die gesamte Rotorlänge durchgehende zickzackförmige Nuten 18 ausgebildet werden, welche sich alle über denselben vorgegebenen Drehwinkel des Rotors erstrecken. Hinsichtlich der Abstufung der Rotorlängen kann der kürzeste Rotor allein durch das Rotormodul 32a gebildet werden. Der nächst längere Rotor wird allein durch das Rotormodul 32b gebildet. Ein Rotor, welcher die doppelte Länge wie der kürzeste aufweist, kann allein durch das Rotormodul 32c ausgebildet werden. Ein nochmals um die Hälfte des Rotormodules 32a längerer Rotor kann durch Kombination eines Rotormoduls 32a und eines Rotormoduls 32b gebildet werden. Der nächst längere Rotor wird durch Kombination eines Rotormoduls 32c und eines Rotormoduls 32a gebildet. Entsprechend geht die Abstufung weiter bis zu dem längsten im Beispiel gemäß Fig. 13 gezeigten Rotor, welcher aus einem Rotormodul 32c, zwei Rotormodulen 32b und einem Rotormodul 32a gebildet wird. Selbstverständlich können mit dem System auch noch längere Rotoren ausgebildet werden.

Vorteilhaft bei dieser modularen Bauweise des Rotors ist, dass keine unterschiedlich langen Permanentmagneten vorgefertigt werden müssen, vielmehr können nach einem Baukastenprinzip fertig vorgefertigte Rotormodule beliebig aneinander gesteckt werden, um so kostengünstig und einfach unterschiedlich lange Rotoren ausbilden zu können.

### Bezugszeichenliste

- 2: Rotorsegmente
- 4: Permanentmagnete
- 6: Nuten
- 8: Längskanten
- 10: Erweiterung
- 12: Rotorbleche
- 14: Schlitze
- 16: Kanten bzw. Längskanten
- 18: Nuten
- 20: Spalt
- 22: Freiraum
- 23: Kanal
- 24: Loch
- 26: Verbindungsstege
- 28: Kerben
- 30: Kerben
- 32: Rotormodul
- 34: Rotorwelle
- 36: Permanentmagnetabschnitte
- 38: Abdeckscheibe
- X: Drehachse
- a: Nutbreite
- b: Abstand
- α: Neigungswinkel

## Patentansprüche

1. Permanentmagnet-Rotor für einen Elektromotor, bei welchem sich die Permanentmagnete (4; 36) im Inneren des Rotors parallel zur Rotationsachse (X) des Rotors erstrecken und im Bereich der radial äußeren Längskanten (8; 16) der Permanentmagnete (4; 36) am Außenumfang des Rotors nach außen geöffnete Nuten ausgebildet sind, welche jeweils zur Längskante (6; 18) des angrenzenden Permanentmagneten (4; 36) in Umfangsrichtung geneigt oder gekrümmt verlaufen, wobei die Nuten (6; 18) an der Außenseite des Rotors in Umfangsrichtung eine geringere Breite aufweisen als in einem radial weiter innen liegenden Bereich der Nut (6; 18) und die Querschnittsform der Nut (6; 18) über die Länge des Rotors konstant ist
**dadurch gekennzeichnet, dass** die Mittellinie jeder Nut (6; 18) die Längskante (8; 16) des angrenzenden Permanentmagneten (4; 36) zumindest einmal kreuzt.

2. Permanentmagnet-Rotor nach Anspruch 1 **dadurch gekennzeichnet, dass** der Rotor aus zumindest zwei in Längsrichtung (X) aneinander gefügten vorgefertigten Rotormodulen (32) besteht, wobei in jedem der Rotormodule (32) Permanentmagnetabschnitte (36) angeordnet sind und jedes der Rotormodule (32) an seinem Außenumfang Nutabschnitte (6; 18) aufweist, wobei bei zusammengefügten Rotormodulen (32) die Nutabschnitte (6; 18) der einzelnen Rotormodule (32) gemeinsam die Nuten (6; 18) und die Permanentmagnetabschnitte (36) der einzelnen Rotormodule gemeinsam die Permanentmagnete (4) des Rotors bilden.

3. Permanentmagnet-Rotor nach Anspruch 2, **dadurch gekennzeichnet, dass** die Nutabschnitte (6; 18) jedes Rotormoduls (32) zu der Längskante (8; 16) des angrenzenden Permanentmagnetabschnittes (36) derart geneigt sind, dass an jeder Stirnseite der Rotormodule (32) die Mittellinien der Nutabschnitte (6; 18) in Umfangsrichtung jeweils denselben vorbestimmten Abstand (b) zu der Längskante (8; 16) des Permanentmagnetabschnittes (36) aufweisen.

4. Permanentmagnet-Rotor nach Anspruch 2 oder 3, **dadurch gekennzeichnet, dass** die Mittellinie jedes Nutabschnittes (6; 18) die Längskante (8; 16) des angrenzenden Permanentmagnetabschnittes (36) zumindest einmal kreuzt.

5. Permanentmagnet-Rotor nach einem der Ansprüche 2 bis 4, **dadurch gekennzeichnet, dass** der Rotor zumindest zwei Rotormodule (32) aufweist, welche in Richtung der Rotationsachse (X) des Rotors unterschiedlich lang sind.

6. Permanentmagnet-Rotor nach einem der Ansprüche 2 bis 5, **dadurch gekennzeichnet, dass** zumindest eines der Rotormodule (32) Nutabschnitte (6; 18) aufweist, welche jeweils derart gewinkelt ausgebildet sind, dass die Mittellinien der Nutabschnitte (6; 18) an den beiden entgegengesetzten Stirnseiten des Rotormoduls (32) in Umfangsrichtung in derselben Richtung gleich weit von der Längskante (8; 16) des Permanentmagneten (4; 36) beabstandet sind.

7. Permanentmagnet-Rotor nach einem der vorangehenden Ansprüche, **dadurch gekennzeichnet, dass** die Nuten (6; 18) und/oder die Nutabschnitte (6; 18) zickzackförmig zu der Längskante (8; 16) des angrenzenden Permanentmagneten (4) oder Permanentmagnetabschnitt (36) verlaufen.

8. Permanentmagnet-Rotor nach einem der vorangehenden Ansprüche, **dadurch gekennzeichnet, dass** die Nuten (6; 18) jeweils derart ausgebildet sind, dass sie jeweils über die gesamte Rotorlänge (X) zumindest die Längskante (8; 16) des angrenzenden Permanentmagneten (4; 36) in radialer Richtung überdecken.

9. Permanentmagnet-Rotor nach einem der vorangehenden Ansprüche, **dadurch gekennzeichnet, dass** die Nuten (6; 18) derart angeordnet sind, dass jeweils eine Nut (6; 18) die radial äußeren Längskanten (8; 16) zweier benachbarter Permanentmagneten (4; 36) in radialer Richtung überdeckt.

10. Permanentmagnet-Rotor nach einem der vorangehenden Ansprüche, **dadurch gekennzeichnet, dass** die Nuten (6; 18) einen schwalbenschwanzförmigen Querschnitt aufweisen.

11. Permanentmagnetrotor nach einem der vorangehenden Ansprüche, **dadurch gekennzeichnet, dass** in zumindest einem Teil der Nuten (6; 18) oder in zusätzlichen im Rotor ausgebildeten Kanälen (23) elektrische Leiter angeordnet sind.

12. Permanentmagnet-Rotor nach einem der vorangehenden Ansprüche, **dadurch gekennzeichnet, dass** angrenzend an die Längskanten (8; 16) der Permanentmagneten (4; 36) im umgebenden Material des Rotors Freiräume (22; 28) ausgebildet sind, welche vorzugsweise mit einer angrenzenden Nut (6; 18) in Verbindung stehen.

13. Permanentmagnet-Rotor nach Anspruch 12, **dadurch gekennzeichnet, dass** der Rotor aus einer Vielzahl aufeinander geschichteter Rotorbleche (12) ausgebildet ist, wobei die Freiräume (22; 28) lediglich in einem Teil der Rotorbleche ausgebildet sind und sich vorzugsweise zwischen zwei benachbarten Permanentmagneten (4; 36) erstrecken.

14. Permanentmagnet-Rotor nach einem der Ansprüche 1 bis 12, **dadurch gekennzeichnet, dass** der Rotor aus zusammengesetzten massiven, vorzugsweise gesinterten, Segmenten (2) gebildet ist. wobei zwischen den aneinender angrenzenden Segmenten (2) Aufnahmeräume für die Permanentmagneten (4) gebildet sind.

15. Verfahren zur Herstellung eines Permanentmagnet-Rotors nach einem der Ansprüche 1 bis 13, bei welchem der Rotor aus einer Vielzahl von Rotorblechen (12) zusammengesetzt wird,
wobei die einzelnen Rotorbleche (12) in der Reihenfolge, in der sie zusammengesetzt werden, nacheinander gestanzt werden und das Werkzeug zum Stanzen der Nuten (18) am Außenumfang des Rotors nach jedem Stanzvorgang um einen vorbestimmten Winkel um seine Längsachse (X) gedreht wird, um die bezüglich der Längskanten (16) der Permanentmagneten (4; 36) geneigten Nuten (18) am Außenumfang des Rotors auszubilden, und
nach dem Zusammensetzen der Rotorbleche (12) zu einem Rotor in diesen zur Länge des Rotors passende Permanentmagneten (4; 36) eingesetzt werden.

16. Verfahren nach Anspruch 15, bei welchem der Rotor aus zumindest zwei vorgefertigten Rotormodulen (32) zusammengesetzt wird, wobei
die Rotormodule (32) jeweils aus einer Vielzahl von Rotorblechen (12) zusammengesetzt werden,
die einzelnen Rotorbleche (12) eines Rotormoduls (32) in der Reihenfolge, in der sie zusammengesetzt werden, nacheinander gestanzt werden und das Werkzeug zum Stanzen der Nuten (18) am Außenumfang des Rotors nach jedem Stanzvorgang um einen vorbestimmten Winkel um seine Längsachse (X) gedreht wird, um die bezüglich der Längskanten (16) der Permanentmagneten (4; 36) geneigten Nutabschnitte (18) am Außenumfang des Rotormoduls (32) auszubilden, und
nach dem Zusammensetzen der Rotorbleche (12) zu einem Rotormodul (32) in dieses zur Länge des Rotormoduls (32) passende Permanentmagnetabschnitte (36) eingesetzt werden.

17. Verfahren nach Anspruch 16 zum Ausbilden von Rotoren mit unterschiedlichen Längen, bei welchem Rotormodule (32) bestimmter Länge vorgefertigt werden, in welchen Permanentmagnetabschnitte (36) angeordnet sind, welche sich parallel zur Rotationsachse (X) des Rotormoduls (32) über dessen axiale Länge erstrecken, und die Rotormodule (32) jeweils am Außenumfang Nutabschnitte (18) aufweisen, die zu einer radial äußeren Längskante (16) eines angrenzenden Permanentmagnetabschnittes (36) geneigt sind, und je nach gewünschter Rotorlänge eine unterschiedliche Anzahl von Rotormodulen (32) in Längsrichtung (X) derart aneinander gefügt werden, dass die Permanentmagnetabschnitte (36) der einzelnen Rotormodule (32) gemeinsam Permanentmagnete (4) bilden, welche sich in axialer Richtung durch den Rotor erstrecken.

18. Verfahren nach Anspruch 17, bei welchem zumindest zwei, vorzugsweise drei Arten von Rotormodulen (32) mit unterschiedlicher Modullänge vorgesehen sind.

19. Verfahren nach Anspruch 18, bei welchem eine zweite Art von Rotormodulen (32b) eine Modullänge aufweist, welche um die Hälfte länger als die Modullänge einer ersten Art von Rotormodulen (32a) ist, und vorzugsweise eine dritte Art von Rotormodulen (32c) vorgesehen ist, welche eine Modullänge aufweist, welche die doppelte Länge der Modullänge der ersten Art von Rotormodulen (32a) hat.

## Claims

1. A permanent magnet rotor for an electric motor, with which the permanent magnets (4; 36) extend in the inside of the rotor parallel to the rotation axis (X) of the rotor, and grooves open to the outside are formed in the region of the radially outer longitudinal edges (8; 16) of the permanent magnets (4; 36) on the outer periphery of the rotor, said grooves in each case running inclined or in an arcuate manner to the longitudinal edge (6; 18) of the adjacent permanent magnets (4; 36) in the peripheral direction, wherein the grooves (6; 18) at the outer side of the rotor have a smaller width in the peripheral direction than in a region of the groove (6; 18) which lies radially further to the inside, and the cross-sectional shape of the groove (6; 18) is constant over the length of the rotor,
**characterised in that** the middle line of each groove (6; 18) crosses the longitudinal edge (8; 16) of the adjacent permanent magnet (4; 36) at least once.

2. A permanent magnet rotor according to claim 1, **characterised in that** the rotor consists of at least two premanufactured rotor modules (32) which are joined to one another in the longitudinal direction (X), wherein permanent magnet sections (36) are arranged in each of the rotor modules (32), and each of the rotor modules (32) on its outer periphery comprises groove sections (6; 18), wherein when the rotor modules (32) are joined together, the groove sections (6; 18) of the individual rotor modules (32) together form the grooves (6;18), and the permanent magnet sections (36) of the individual rotor modules together form the permanent magnets (4) of the rotor.

3. A permanent magnet rotor according to claim 2, **characterised in that** the groove sections (6; 18) of each rotor module (32) are inclined to the longitudinal edge (8; 16) of the adjacent permanent magnet section (36), in a manner such that the middle lines of the groove sections (6;18) in the peripheral direction, in each case have the same predefined distance (b) to the longitudinal edge (8; 16) of the permanent magnet section (36), at each end-side of the rotor modules (32).

4. A permanent magnet rotor according to claim 2 or 3, **characterised in that** the middle line of each groove section (6; 18) crosses the longitudinal edge (8, 16) of the adjacent permanent magnet section (36) at least once.

5. A permanent magnet rotor according to one of the claims 2 to 4, **characterised in that** the rotor comprises at least two rotor modules (32) which are differently long in the direction of the rotation axis (X) of the rotor.

6. A permanent magnet rotor according to one of the claims 2 to 5, **characterised in that** at least one of the rotor modules (32) comprises groove sections (6; 18), which are in each case designed in an angled manner, such that the middle lines of the groove sections (6; 18) at the two opposite end-sides of the rotor module (32) in the peripheral direction, are distanced equally far from the longitudinal edge (8, 16) of the permanent magnet (4; 36) in the same direction.

7. A permanent magnet rotor according to one of the preceding claims, **characterised in that** the grooves (6; 18) and/or the groove sections (6; 18) run in a zigzag manner to the longitudinal edge (8; 16) of the adjacent permanent magnet (4) or permanent magnet section (36)

8. A permanent magnet rotor according to one of the preceding claims, **characterised in that** the grooves (6; 18) in each case are designed in a manner such that in each case they cover at least the longitudinal edge (8; 16) of the adjacent permanent magnet (4; 36) in the radial direction, over the whole rotor length (X).

9. A permanent magnet rotor according to one of the preceding claims, **characterised in that** the grooves (6; 18) are arranged in a manner, such that in each case one groove (6; 18) covers the radially outer longitudinal edges (8; 16) of two adjacent permanent magnets (4; 36) in the radial direction.

10. A permanent magnet rotor according to one of the preceding claims, **characterised in that** the grooves (6; 18) have a swallowtail-shaped cross section.

11. A permanent magnet rotor according to one of the preceding claims, **characterised in that** electrical leads are arranged in at least in a part of the grooves (6; 18) or in additional channels (23) formed in the rotor.

12. A permanent magnet rotor according to one of the preceding claims, **characterised in that** free spaces (22; 28) are formed adjacent to the longitudinal edges (8; 16) of the permanent magnets (4; 36) in the surrounding material of the rotor, said free spaces preferably being in connection with an adjacent groove (6; 18).

13. A permanent magnet rotor according to claim 12, **characterised in that** the rotor is formed of a multitude of rotor laminations (12) layered on one another, wherein the free spaces (22; 28) are only formed in a part of the rotor laminations, and preferably extend between two adjacent permanent magnets (14; 36).

14. A permanent magnet rotor according to one of the claims 1 to 12, **characterised in that** the rotor is formed of assembled, solid, preferably sintered segments (2), wherein receiver spaces for the permanent magnets (4) are formed between the segments (2) which are adjacent to one another.

15. A method for manufacturing a permanent magnet rotor according to one of the claims 1 to 13, with which the rotor is assembled from a multitude of rotor laminations (12),
wherein the individual rotor laminations (12) are consecutively punched in the sequence in which they are assembled, and the tool for punching the grooves (18) on the outer periphery of the rotor is rotated about its longitudinal axis (X) by a predefined angle after each punching procedure, in order to form the grooves (18) which are inclined with respect to the longitudinal edges (16) of the permanent magnets (4; 36), on the outer periphery of the rotor, and
permanent magnets (4; 36) which fit with the length of the rotor are inserted into the rotor after assembling the rotor laminations (12) into a rotor.

16. A method according to claim 15, with which the rotor is assembled of at least two premanufactured rotor modules (32), wherein
the rotor modules (32) in each case are assembled from a multitude of rotor laminations (12),
the individual rotor laminations (12) of a rotor module (32) are consecutively punched in the sequence in which they are assembled, and the tool for punching the grooves (18) on the outer periphery of the rotor is rotated by a predefined angle about its longitudinal axis (X) after each punching procedure, in order to form the groove sections (18) which are inclined with respect to the longitudinal edges (16) of the permanent magnets (4; 36), on the outer periphery of the rotor module (32), and
permanent magnet sections (36) fitting with the length of the rotor module (32) are inserted into the rotor module after the assembly of the rotor laminations (12) into this rotor module (32).

17. A method according to claim 16 for forming rotors with different lengths, with which rotor modules (32) of a certain length are premanufactured, in which permanent magnet sections (36) are arranged, which extend parallel to the rotation axis (X) of the rotor module (32) over its axial length, and the rotor modules (32) in each case comprise groove sections (18) on the outer periphery, which are inclined to a radially outer longitudinal edge (16) of an adjacent permanent magnet section (36), and depending on the desired rotor length, a different number of rotor modules (32) are joiner together in the longitudinal direction (X), in a manner such that the permanent magnet sections (36) of the individual rotor modules (32) together form permanent magnets (4) which extend through the rotor in the axial direction.

18. A method according to claim 17, with which at least two, preferably three types of rotor modules (32) with a different module length are provided.

19. A method according to claim 17, with which a second type of rotor module (32b) has a module length which is longer than the module length of the first type of rotor module (32a) by half, and preferably a third type of rotor module (32c) is provided, which has a module length which has double the length of the module length of the first type of rotor module (32a).

## Revendications

1. Rotor à aimants permanents pour un moteur électrique, dans lequel les aimants permanents (4 ; 36) s'étendent à l'intérieur du rotor, parallèlement à l'axe de rotation (X) du rotor, et sur la périphérie extérieure du rotor, dans la région des arêtes longitudinales radialement extérieures (8 ; 16) des aimants permanents (4 ; 36), sont aménagées des rainures ouvertes vers l'extérieur, qui se développent en s'inclinant ou en s'incurvant, dans la direction circonférentielle, chacune par rapport à l'arête longitudinale (6 ; 18) de l'aimant permanent contigu (4 ; 36) respectif, les rainures (6 ; 18) présentant alors sur la face extérieure du rotor, dans la direction circonférentielle, une largeur plus petite que dans une région, située davantage à l'intérieur dans le sens radial, de la rainure (6 ; 18) et la forme, en coupe transversale, de la rainure (6 ; 18) restant identique sur la longueur du rotor, **caractérisé en ce que** l'axe central de chaque rainure (6 ; 18) croise au moins une fois l'arête longitudinale (8 ; 16) des aimants permanents contigus (4 ; 36).

2. Rotor à aimants permanents selon la revendication 1, **caractérisé en ce que** le rotor est constitué d'au moins deux modules de rotor (32) préfabriqués, joints l'un à l'autre dans la direction longitudinale (X), des tronçons d'aimant permanent (36) étant disposés dans chacun des modules de rotor (32) et chacun des modules de rotor (32) présentant, sur sa périphérie extérieure, des tronçons de rainure (6 ; 18), étant précisé que, lorsque les modules de rotor (32) sont assemblés, les tronçons de rainure (6 ; 18) des différents modules de rotor (32) forment conjointement les rainures (6 ; 18) et les tronçons d'aimant permanent (36) des différents modules de rotor forment conjointement les aimants permanents (4) du rotor.

3. Rotor à aimants permanents selon la revendication 2, **caractérisé en ce que** les tronçons de rainure (6 ; 18) de chaque module de rotor (32) sont inclinés par rapport à l'arête longitudinale (8 ; 16) du tronçon d'aimant permanent (36) contigu, ceci de telle manière qu'à chaque face frontale des modules de rotor (32), les axes centraux des tronçons de rainure (6 ; 18) présentent respectivement, en direction circonférentielle, le même espacement (b) prédéterminé par rapport à l'arête longitudinale (8 ; 16) du tronçon d'aimant permanent (36).

4. Rotor à aimants permanents selon la revendication 2 ou 3, **caractérisé en ce que** l'axe central de chaque tronçon de rainure (6 ; 18) croise au moins une fois l'arête longitudinale (8 ; 16) du tronçon d'aimant permanent (36) contigu.

5. Rotor à aimants permanents selon l'une des revendications 2 à 4, **caractérisé en ce que** le rotor présente au moins deux modules de rotor (32), qui sont de longueurs différentes dans la direction de l'axe de rotation (X) du rotor.

6. Rotor à aimants permanents selon l'une des revendications 2 à 5, **caractérisé en ce qu'**au moins l'un des modules de rotor (32) présente des tronçons de rainure (6 ; 18) qui sont dotés chacun d'une configuration coudée telle, que les axes centraux des tronçons de rainure (6 ; 18) sont, sur les deux faces frontales opposées du module de rotor (32), espacés en direction circonférentielle, dans le même sens et d'une distance identique, de l'arête longitudinale (8 ; 16) de l'aimant permanent (4 ; 36).

7. Rotor à aimants permanents selon l'une des revendications précédentes, **caractérisé en ce que** les rainures (6 ; 18) et/ou les tronçons de rainure (6 ; 18) se développent en zigzag par rapport à l'arête longitudinale (8 ; 16) de l'aimant permanent (4) contigu ou du tronçon d'aimant permanent (36) contigu.

8. Rotor à aimants permanents selon l'une des revendications précédentes, **caractérisé en ce que** les rainures (6 ; 18) sont aménagées chacune d'une manière telle, qu'elles couvrent chacune en direction radiale, sur la longueur entière (X) du rotor, au moins l'arête longitudinale (8 ; 16) de l'aimant permanent (4 ; 36) contigu.

9. Rotor à aimants permanents selon l'une des revendications précédentes, **caractérisé en ce que** les rainures (6 ; 18) sont disposées de telle manière qu'une rainure (6 ; 18) couvre chaque fois, en direction radiale, les arêtes longitudinales radialement extérieures (8 ; 16) de deux aimants permanents (4 ; 36) voisins.

10. Rotor à aimants permanents selon l'une des revendications précédentes, **caractérisé en ce que** les rainures (6 ; 18) présentent une section transversale en forme de queue d'aronde.

11. Rotor à aimants permanents selon l'une des revendications précédentes, **caractérisé en ce que** dans au moins une partie des rainures (6 ; 18) ou dans des canaux additionnels (23) ménagés dans le rotor, sont disposés des conducteurs électriques.

12. Rotor à aimants permanents selon l'une des revendications précédentes, **caractérisé en ce qu'**en position contiguë aux arêtes longitudinales (8 ; 16) des aimants permanents (4 ; 36) sont aménagés, dans le matériau environnant du rotor, des espaces libres (22 ; 28) qui, de préférence, sont placés en communication avec une rainure (6 ; 18) contiguë.

13. Rotor à aimants permanents selon la revendication 12, **caractérisé en ce que** le rotor est constitué d'une multiplicité de tôles de rotor (12) superposées, les espaces libres (22 ; 28) étant alors réalisés dans une partie seulement des tôles de rotor et s'étendant, de préférence, entre deux aimants permanents (4 ; 36) voisins.

14. Rotor à aimants permanents selon l'une des revendications 1 à 12, **caractérisé en ce que** le rotor est formé de secteurs massifs (2) assemblés, de préférence frittés, des espaces de réception pour les aimants permanents (4) étant alors formés entre les secteurs (2) adjacents l'un à l'autre.

15. Procédé pour la fabrication d'un rotor à aimants permanents selon l'une des revendications 1 à 13, suivant lequel
• le rotor est composé d'une multiplicité de tôles de rotor (12),
• les tôles de rotor (12) individuelles étant découpées à la presse l'une après l'autre, dans l'ordre dans lequel elles sont assemblées, et l'outil pour former par découpage les rainures (18) présentes sur la périphérie extérieure du rotor étant alors, après chaque opération de découpage, tourné d'un angle prédéterminé autour de son axe longitudinal (X), pour la réalisation, sur la périphérie extérieure du rotor, des rainures (18) inclinées par rapport aux arêtes longitudinales (16) des aimants permanents (4 ; 36), et
• après l'assemblage des tôles de rotor (12) en un rotor, des aimants permanents (4 ; 36), adaptés à la longueur du rotor, sont insérés dans ce dernier.

16. Procédé selon la revendication 15, suivant lequel le rotor est composé d'au moins deux modules de rotor (32) préfabriqués,
• les modules de rotor (32) étant chacun composés d'une multiplicité de tôles de rotor (12),
• les tôles de rotor (12) individuelles d'un module de rotor (32) étant découpées à la presse l'une après l'autre, dans l'ordre dans lequel elles sont assemblées, et l'outil pour former par découpage les rainures (18) présentes sur la périphérie extérieure du rotor étant alors, après chaque opération de découpage, tourné d'un angle prédéterminé autour de son axe longitudinal (X), pour la réalisation, sur la périphérie extérieure du module de rotor (32), des tronçons de rainure (18) inclinés par rapport aux arêtes longitudinales (16) des aimants permanents (4 ; 36), et
• après l'assemblage des tôles de rotor (12) en un module de rotor (32), des tronçons d'aimant permanent (36), adaptés à la longueur du module de rotor (32), sont insérés dans ce dernier.

17. Procédé selon la revendication 16 pour la réalisation de rotors de longueurs différentes, suivant lequel des modules de rotor (32) d'une longueur déterminée sont préalablement fabriqués, modules de rotor dans lesquels sont disposés des tronçons d'aimant permanent (36), qui s'étendent parallèlement à l'axe de rotation (X) du module de rotor (32), sur la longueur axiale de ce dernier, et les modules de rotor (32) présentent chacun, sur leur périphérie extérieure, des tronçons de rainure (18), qui sont inclinés par rapport à une arête longitudinale (16), radialement extérieure, d'un tronçon d'aimant permanent (36) contigu, et suivant la longueur de rotor souhaitée, un nombre différent de modules de rotor (32) sont joints l'un à l'autre, dans la direction longitudinale (X), de telle manière que les tronçons d'aimant permanent (36) des différents modules de rotor (32) forment conjointement des aimants permanents (4), qui s'étendent en direction axiale à travers le rotor.

18. Procédé selon la revendication 17, suivant lequel au moins deux, de préférence trois, types de modules de rotor (32) de longueurs de module différentes, sont prévus.

19. Procédé selon la revendication 18, suivant lequel un deuxième type de modules de rotor (32b) présente une longueur de module, qui est une demi-fois plus longue que la longueur de module d'un premier type de modules de rotor (32a), et il est prévu, de préférence, un troisième type de modules de rotor (32c), lequel présente une longueur de module qui est le double de la longueur de module du premier type de modules de rotor (32a).
